# EUROPÄISCHE PATENTANMELDUNG

(11) **EP 4 006 659 A1**
(43) Veröffentlichungstag der Anmeldung: **01.06.2022**
(21) Anmeldenummer: 20209780.4
(22) Anmeldetag: 25.11.2020
(51) Int. Cl.: G05B 19/042, H04L 12/40

(54) **EDGE-GERÄT**

(71) Anmelder: Siemens Aktiengesellschaft, 80333 München (DE)
(72) Erfinder: Gottwald, Sven, 90475 Nürnberg (DE)

(57) **Zusammenfassung**

Ein erfindungsgemäßes Edge-Gerät (1) umfasst
- einen ersten Kommunikationsanschluss (2) zu einem ersten Netzwerk (3), insbesondere einem öffentlichen Netzwerk,
- zumindest zwei zweite Kommunikationsanschlüssen (4a, 4b, 4c, 4d) zu einem zweiten Netzwerk (20, 30), insbesondere einem privaten industriellen Netzwerk, und
- eine Anwendungs-Software (12), die über den ersten Anschluss (2) in das Gerät (1) ladbar ist,
wobei mittels der Anwendungs-Software (12) die zweiten Anschlüsse (4a, 4b, 4c, 4d) für einen redundanten Betrieb des zweiten Netzwerkes (20, 30) gemäß eines industriellen Redundanz-Protokolls konfigurierbar sind, und wobei die Anwendungs-Software (12) zur Ausführung von Redundanzfunktionen des Redundanz-Protokolls ausgestaltet und eingerichtet ist.

Hierdurch ist eine schnelle und aufwandsarme Möglichkeit zur Bereitstellung, Änderung oder Nachrüstung von Redundanzfunktionen für ein redundant betriebenes industrielles Kommunikationsnetz möglich.

## Beschreibung

Die Erfindung betrifft ein Edge-Gerät gemäß Patentanspruch 1, eine in das Edge-Gerät ladbare Anwendungs-Software gemäß Patentanspruch 12 sowie ein Verfahren zur Bereitstellung von Redundanzfunktionen auf einem derartigen Edge-Gerät gemäß Patentanspruch 13.

Üblicherweise umfasst ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozeßautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Äußerst problematisch sind Unterbrechungen von Kommunikationsverbindungen zwischen Rechnereinheiten eines industriellen Automatisierungssystems oder industriellen Automatisierungsgeräten, da dies zu einem Informationsverlust und somit zu einer Störung der Anlage, der Maschine oder des Gerätes führen kann. Außerdem kann es beispielsweise zu einer unerwünschten oder unnötigen Wiederholung einer Übermittlung einer Dienstanforderung führen. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle, wie Media Redundancy Protocol, High-availability Seamless Redundancy, Parallel Redundancy Protocol oder (Rapid) Spanning Tree Protocol, für hochverfügbare, redundant betreibbare industrielle Kommunikationsnetze entwickelt worden.

Media Redundancy Protocol (MRP) ist im Standard IEC 62439-2 definiert und ermöglicht eine Kompensation einzelner Verbindungsausfälle in Netzen bei redundanter Übertragung von Nachrichten. Das Netz umfasst hierbei mehrere innerhalb einer Ringtopologie verbundene Kommunikationsgeräte, die jeweils zwei Anschlüsse für die Verbindung des Gerätes mit der Ringtopologie umfassen. Von den Kommunikationsgeräten ist ein Kommunikationsgerät als sogenannter "Ring-Redundanz-Manager" innerhalb der Ringtopologie eingerichtet. Die anderen Kommunikationsgeräte werden als "Ring-Clients" bezeichnet. Der Ring-Redundanz-Manager überwacht die Ringtopologie auf Unterbrechungen anhand versendeter Test-Nachrichten und steuert eine Weiterleitung von Nachrichten mit Nutzdaten zwischen seinen zwei Anschlüssen, wenn eine Unterbrechung detektiert wird.

High-availability Seamless Redundancy (HSR) und Parallel Redundancy Protocol (PRP) sind im Standard IEC 62439-3 definiert und ermöglichen eine stoßfreie redundante Übertragung von Nachrichten, insbesondere ohne Umschaltstöße bei Topologieänderungen. Entsprechend High-availability Seamless Redundancy und Parallel Redundancy Protocol wird jede Nachricht von einem sendenden Kommunikationsgerät dupliziert und auf zwei verschiedenen Wegen über ein Netzwerk zu einem Empfänger geschickt. Durch ein empfängerseitiges Kommunikationsgerät werden Duplikate darstellende redundante Nachrichten aus einem empfangenen Datenstrom ausgefiltert.

In einem redundanten HSR- oder PRP-Kommunikationsnetz kann eine Netzkomponente, die einen Zugriff auf das redundante Kommunikationsnetz bereitstellt, unterschiedliche Rollen annehmen. Eine HSR/PRP-fähige Netzkomponente in einfachster Form wird als Double Attached Node (DAN) bezeichnet. Eine Netzkomponente, die Datagramme zwischen Teilnehmern oder Endgeräten in einem HSR- oder PRP-Kommunikationsnetz einerseits und Endgeräten bzw. Netzsegmenten ohne HSR/PRP-Funktionalität andererseits vermittelt, wird als HSR/PRP-Proxy oder RedBox bezeichnet. Grundsätzlich kann eine Netzkomponente für einen Zugriff auf ein redundantes HSR- oder PRP-Kommunikationsnetz auch mehrere HSR-Ringe verbinden oder Kommunikation zwischen HSR- und PRP-Netzsegmenten umsetzen. In diesem Fall wird die Netzkomponente als HSR-HSR-Koppler oder QuadBox bzw. HSR-PRP-Koppler bezeichnet.

In den Netzkomponenten bzw. Kommunikationsgeräten sind die Redundanzfunktionen (z.B. MRP-Ring-Redundanz-Manager-Funktion, HSR-Duplikate-Filterfunktion) üblicherweise durch ein Field Programmable Gate Array (FPGA), siehe z.B. EP 2 838 220 A1, bzw. in einer Firmware implementiert. Sie sind somit eng mit der Hardware des Gerätes gekoppelt. Eine nachträgliche Änderung oder ein Nachrüsten derartiger Redundanzfunktionen in einem Gerät ist somit mit großem Aufwand verbunden oder überhaupt nicht möglich.

Ausgehend hiervon ist es Aufgabe vorliegender Erfindung, ein Gerät anzugeben, das eine schnelle und aufwandsarme Möglichkeit zur Bereitstellung, Änderung oder Nachrüstung von Redundanzfunktionen für ein redundant betriebenes industrielles Kommunikationsnetz ermöglicht.

Die Lösung dieser Aufgabe gelingt durch ein Edge-Gerät gemäß Patentanspruch 1. Vorteilhafte Ausgestaltungen sind Gegenstand der Unteransprüche 2 bis 11. Eine Anwendungs-Software zum Laden in dieses Gerät ist Gegenstand des Anspruchs 12. Ein Verfahren zur Bereitstellung von Redundanzfunktionen gemäß eines industriellen Redundanzprotokolls auf einem derartigen Edge-Gerät ist Gegenstand des Anspruchs 13.

Die Erfindung beruht auf der Erkenntnis, dass Edge-Geräte sehr vorteilhaft für eine flexible Bereitstellung von Redundanzfunktionen genutzt werden können. Industrielle Automatisierungssysteme bzw. industrielle Kommunikationsnetze werden üblicherweise in einem datentechnischen "Inselbetrieb", betrieben, d.h. als privates Netzwerk, welches von öffentlichen Netzwerken, insbesondere dem Internet, getrennt ist. Dies dient beispielsweise dazu, datentechnische Angriffe auf das Automatisierungssystem zu verhindern. Vermehrt wird jedoch ein großer Nutzen darin gesehen, Daten mit einem öffentlichen Netzwerk, insbesondere einer Datenwolke (im Folgenden auch "Cloud" genannt), austauschen können. Die Gründe sind vielfältig, beispielsweise sollen damit verschiedene lokale Automatisierungssysteme miteinander vernetzt werden können, eine Kontrolle des Produktionsbetriebs soll von verschiedenen Standorten weltweit aus erfolgen können, Aufträge sollen in die Automatisierungsanordnungen übermittelt werden können und Produktionsdaten ausgelesen werden können.

Um den Datenaustausch zwischen den privaten Netzwerken der Automatisierungsanordnungen und dem öffentlichen Netzwerk, insbesondere der Cloud, zu regulieren und zu kontrollieren, werden an der Grenze zwischen dem privaten und dem öffentlichen Netzwerk sogenannte Edge-Geräte oder Edge-Devices eingesetzt.

Das erfindungsgemäße Edge-Gerät umfasst einen ersten Kommunikationsanschluss zu einem ersten Netzwerk, insbesondere einem öffentlichen Netzwerk, und zumindest zwei zweite Kommunikationsanschlüssen zu einem zweiten Netzwerk, insbesondere einem privaten industriellen Netzwerk. Derartige Anschlüsse werden häufig auch als "Ports" bezeichnet.

Erfindungsgemäß umfasst das Gerät eine Anwendungs-Software, die über den ersten Kommunikationsanschluss in das Gerät ladbar ist, wobei mittels der Anwendungs-Software die zweiten Anschlüsse für einen redundanten Betrieb des zweiten Netzwerkes gemäß eines Redundanz-Protokolls konfigurierbar sind, und wobei die Anwendungs-Software zur Ausführung von Redundanzfunktionen des Redundanz-Protokolls ausgestaltet und eingerichtet ist.

Die Bereitstellung der Redundanzfunktionen erfolgt somit rein software-basiert und dadurch unabhängig von der Hardware des Gerätes. Da die Bereitstellung der Anwendungs-Software und somit der Redundanzfunktionen über den ersten Anschluss erfolgt, kann dies auch nachträglich zur eigentlichen Herstellung des Edge-Gerätes erfolgen. Insgesamt können hierdurch die Redundanzfunktionen schnell und aufwandsarm bereitgestellt, geändert oder nachgerüstet werden. Vorteilhaft können so auch Edge-Geräte ohne jeglichen Bezug zum zweiten Netzwerk die Redundanzfunktionen erhalten und so für einen Redundanzbetrieb des zweiten Netzwerks eingesetzt werden.

Das Edge-Gerät kann dabei in seiner Hauptfunktion zum Beispiel ein Gateway zu einer Cloud, ein Switch, eine I/O-Station oder eine speicherprogrammierbare Steuerung (PLC) realisieren. Bei entsprechender datentechnischer Leistungsfähigkeit des Edge-Gerätes können darin auch Anwendungen und Prozesse ablaufen, die beispielsweise auf speicherprogrammierbaren Steuerungen nicht ablaufen können. Das sind beispielsweise komplexe Berechnungen, Auswertungen von Produktionsdaten, Archivierungsaufgaben und dergleichen.

Grundsätzlich kann die Erfindung für eine Vielzahl von Redundanz-Protokollen für hochverfügbare, redundant betreibbare industrielle Kommunikationsnetze verwendet werden.

Gemäß einer vorteilhaften Ausgestaltung ist das Redundanz-Protokoll das Media Redundancy Protokoll (MRP) gemäß IEC 62439-2.

Die Anwendungs-Software kann dann vorteilhaft derart ausgestaltet und eingerichtet sein, dass durch sie, insbesondere wahlweise, eine Funktion eines Ring-Redundanz-Managers oder eine Funktion eines Ring-Redundanz-Clients ausführbar ist. Es kann somit flexibel ein Edge-Gerät zu einem Ring-Redundanz-Manager oder Ring-Redundanz-Client gemäß MRP-Protokoll nachgerüstet werden. Von Vorteil ist durch die Anwendungs-Software sowohl eine Funktion eines Ring-Redundanz-Manager als auch eine Funktion eines Ring-Redundanz-Client ausführbar und die Anwendungs-Software stellt eine Benutzerschnittstelle zur Auswahl einer der beiden Funktionen zu deren Ausführung bereit.

Gemäß einer weiteren vorteilhaften Ausgestaltung ist das Redundanz-Protokoll das High-availability Seamless Redundancy Protocol (HSR) oder das Parallel Redundancy Protocol (PRP) gemäß IEC 62439-3.

Die Anwendungs-Software kann dann vorteilhaft derart ausgestaltet und eingerichtet sein, dass durch sie, insbesondere wahlweise, eine Funktion eines Double Attached Node (DAN), einer Redbox oder einer Quadbox gemäß IEC 62439-3ausführbar ist.

Es kann somit flexibel ein Edge-Gerät zu einem Double Attached Node (DAN), einer Redbox oder einer Quadbox gemäß HSR-oder PRP-Protokoll nachgerüstet werden. Von Vorteil ist durch die Anwendungs-Software sowohl eine Funktion eines Double Attached Node (DAN), einer Redbox und einer Quadbox ausführbar und die Anwendungs-Software stellt eine Benutzerschnittstelle zur Auswahl einer der drei Funktionen zu deren Ausführung bereit.

Gemäß einer weiteren vorteilhaften Ausgestaltung stellt die Anwendungs-Software eine Benutzerschnittstelle für eine logischen Zuordnung von zweiten Anschlüssen (Ports) bereit, d.h. um ausgewählte zweite Anschlüsse (Ports) exklusiv zu allokieren und zur Weiterleitung von Datagrammen geschaltet miteinander zu verknüpfen. Die Benutzerschnittstelle kann dabei auch Möglichkeiten für eine Auswahl von Redundanzfunktionen bzw. deren Parametrierung bereitstellen.

Um Fehlfunktionen von vorneherein zu vermeiden, stellt die Anwendungs-Software von Vorteil eine Prüffunktion bereit, die das Edge-Gerät auf eine Eignung zur Ausführung der Redundanzfunktionen des Redundanz-Protokolls prüft.

Gemäß einer weiteren vorteilhaften Ausgestaltung umfasst das Edge-Gerät eine Ablaufsteuerungsumgebung, die dafür ausgestaltet und eingerichtet ist, auf einem Host-Betriebssystem abzulaufen, das im Gerät installiert ist, wobei die Anwendungs-Software in die Ablaufsteuerungsumgebung zur dortigen Ausführung ladbar ist und wobei die Ablaufsteuerungsumgebung eine Schnittstelle zum Zugriff auf die zweiten Anschlüsse (Ports) aufweist.

Die Anwendungs-Software kann dann einen oder mehrere Software-Container umfassen, die dafür ausgestaltet und eingerichtet sind, von anderen Software-Containern oder Container-Gruppen isoliert innerhalb der Ablaufsteuerungsumgebung auf dem Host-Betriebssystem abzulaufen.

In der Ablaufsteuerungsumgebung oder in weiteren Ablaufsteuerungsumgebungen kann dann isoliert und unabhängig voneinander verschiedene Anwendungs-Software zur Ausführung gebracht werden, um unterschiedliche Funktionalitäten des Edge-Gerätes zur realisieren.

Grundsätzlich können für die Anwendungs-Software auch alternative Micro-Virtualisierungskonzepte, wie Snaps, verwendet werden. Dementsprechend kann die Ablaufsteuerungsumgebung eine Docker Engine oder einen Snap Core umfassen, die bzw. der im Edge-Gerät abläuft.

Von Vorteil umfasst die Ablaufsteuerungsumgebung eine Softwarekomponente, die im Sinne eines Adapters zwischen der Anwendungs-Software und der Hardware, direkt auf die zweiten Anschlüsse (Ports) zugreift und zur Ausführung der Redundanzfunktionen erforderliche Hardware-Ressourcen (Pufferspeicher, Interuptleitung zur CPU, etc.) des Gerätes bereitstellt. Hierdurch kann ein gutes Zusammenwirken der Anwendungs-Software und der Hardware des Edge-Gerätes sichergestellt werden.

Diese Softwarekomponente ist von Vorteil ausgestaltet und eingerichtet, über die zweiten Anschlüsse (Ports) empfangene Datagramme zu filtern und auszuwerten. Hierdurch kann sie beispielsweise in der Funktion eines MRP-Redundanz-Managers sicherstellen, dass der Ring in Ordnung ist, und im Fehlerfall eine Ringumschaltung durchführen.

Eine erfindungsgemäße Anwendungs-Software ist bei einem vorstehend beschriebenen Gerät über den ersten Anschluss in das Gerät ladbar, wobei mittels der Anwendungs-Software die zweiten Anschlüsse (Ports) des Geräts für einen redundanten Betrieb des privaten Netzwerkes gemäß eines Redundanz-Protokolls konfigurierbar sind, und wobei die Anwendungs-Software zur Ausführung von Redundanzfunktionen des Redundanz-Protokolls ausgestaltet und eingerichtet ist.

Ein erfindungsgemäßes Verfahren zur Bereitstellung von Redundanzfunktionen gemäß eines industriellen Redundanzprotokolls auf einem vorstehend beschriebenen Edge-Gerät umfasst die folgenden Schritte:
- Laden der Anwendungs-Software auf das Gerät,
- Prüfen einer Hardware des Edge-Gerätes auf eine Eignung zur Ausführung der Redundanzfunktionen durch die Anwendungs-Software, insbesondere auf das Vorhandensein einer benötigten Anzahl von zweiten Anschlüssen (Ports),
- bei nicht erfolgreicher Prüfung: Beendigen des Verfahrens
- bei erfolgreicher Prüfung: Weiterführen des Verfahrens mit folgenden Schritten:
   - Auffordern zur Bereitstellung von Angaben zur Konfiguration der zweiten Anschlüsse (Ports), insbesondere zu deren logischer Verschaltung, und/oder zur Auswahl von Redundanzfunktionen,
   - Erfassen von Angaben zur Konfiguration der zweiten Anschlüsse (Ports), insbesondere zu deren logischer Verschaltung, und/oder zur Auswahl von Redundanzfunktionen,
   - Konfigurieren der zweiten Anschlüsse (Ports), insbesondere logisches Verschalten der zweiten Anschlüsse (Ports), und/oder Einstellen der ausgewählten Redundanzfunktionen in der Anwendungs-Software,
   - physikalisches Anschließen des zweiten Netzwerkes an die zweiten Anschlüsse (Ports).

Die Erfindung sowie weitere vorteilhafte Ausgestaltungen der Erfindung gemäß Merkmalen der Unteransprüche werden im Folgenden anhand von Ausführungsbeispielen in den Figuren näher erläutert. Dabei sind einander entsprechende Teile mit jeweils gleichen Bezugszeichen versehen. Es zeigen:
- FIG 1: ein erfindungsgemäßes Edge-Gerät,
- FIG 2: eine Einbindung des Edge-Gerätes von FIG 1 in ein redundant betriebenes Netzwerk unter Nutzung des Media Redundancy Protocols (MRP),
- FIG 3: eine Einbindung des Edge-Gerätes von FIG 1 in ein redundant betriebenes Netzwerk unter Nutzung des Highavailability Seamless Redundancy Protocols (HSR),
- FIG 4: einen Verfahrensablauf zur Bereitstellung von Redundanzfunktionen gemäß eines industriellen Redundanzprotokolls auf dem Edge-Gerät von FIG 1.

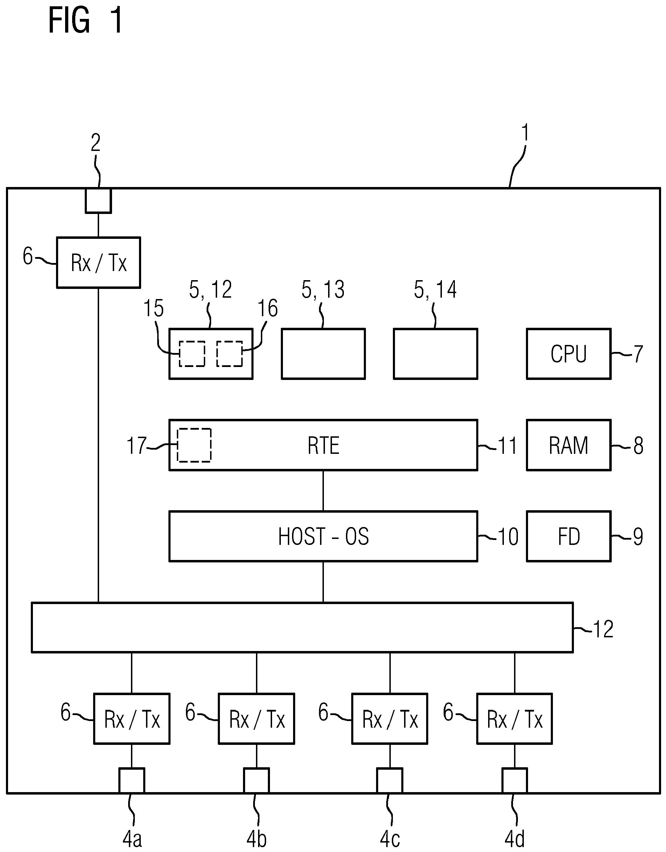

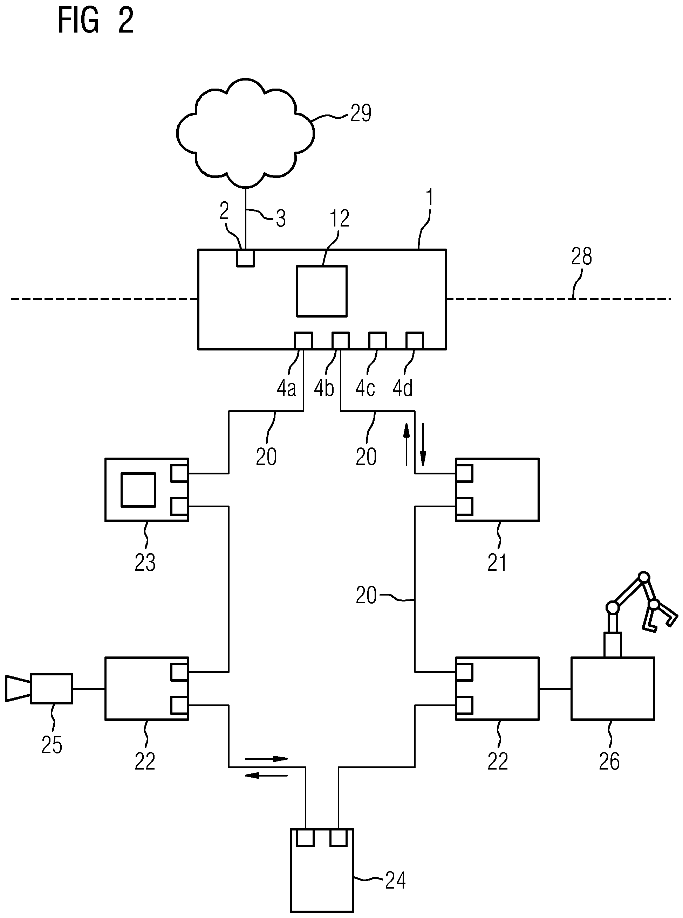

FIG 1 zeigt in vereinfachter und schematischer Darstellung ein erfindungsgemäßes Edge-Gerät 1 mit einem ersten Kommunikationsanschluss (Port) 2 zu einem ersten Netzwerk 3 (siehe FIG 2), insbesondere einem öffentlichen Netzwerk, und mehreren zweiten Kommunikationsanschlüssen, hier beispielhaft vier Kommunikationsanschlüssen (Ports) 4a - 4d, zu einem zweiten Netzwerk 20 (siehe FIG 2), insbesondere einem privaten industriellen Netzwerk. Jedem der Anschlüsse 2, 4a - 4d ist jeweils eine Sende- und Empfangseinheit 6 zugeordnet.

Darüber hinaus umfasst das Gerät 1 einen Prozessor 7 zur Verarbeitung von Programm-Code, einen Arbeitsspeicher 8, in den der Programm-Code ladbar ist, sowie eine Speichereinheit 9, insbesondere eine Festplatte, einen Flash- oder SSD-Speicher, zur nichtflüchtigen Speicherung des Programm-Codes. Im Gerät 1 ist ein Host-Betriebssystem 10 installiert, auf dem mittels des Prozessors 7, des Arbeitsspeichers 8 und der Speichereinheit 9 eine Ablaufsteuerungsumgebung 11, beispielsweise eine Docker Engine, für Anwendungs-Software 12, 13, 14 in Form von Software-Containern 5 ausgeführt wird. Die Ablaufsteuerungsumgebung 11 nutzt Treiber des Host-Betriebssystems 10 zum Zugriff auf einen Datenbus 12 und auf die Sende- und Empfangseinheiten 6. Sie stellt außerdem entsprechende Schnittstellen für die Software-Container 5 der Anwendungs-Software 12, 13, 14 bereit, die in die Ablaufsteuerungsumgebung 11 zur dortigen Ausführung ladbar sind. Dabei sind die Software-Container 5 mit der Anwendungs-Software jeweils dafür konfiguriert, von anderen Software-Containern oder Container-Gruppen isoliert innerhalb der Ablaufsteuerungsumgebung 11 abzulaufen. Andererseits nutzen die Software-Container 5 jeweils gemeinsam mit anderen auf dem Gerät 1 ablaufenden Software-Containern einen Kernel des Host-Betriebssystems 10 des Geräts 1.

Eine Isolation der Software-Container 5 bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Die Anwendungs-Software 12 dient dabei zur Bereitstellung von Redundanzfunktionen gemäß eines industriellen Redundanzprotokolls auf dem Gerät 1. Die Anwendungs-Software 12 ist hierzu, z.B. mittels der Anwendungs-Software 13, über den ersten Anschluss 2 in das Gerät 1 ladbar und darin zur Ausführung bringbar.

Mittels der Anwendungs-Software 12 sind die zweiten Anschlüsse (Ports) 4a - 4b für einen redundanten Betrieb des zweiten Netzwerkes 20 gemäß eines industriellen Redundanz-Protokolls konfigurierbar, und die Anwendungs-Software 12 ist zur Ausführung von Redundanzfunktionen des Redundanz-Protokolls ausgestaltet und eingerichtet.

Bei dem Redundanz-Protokoll kann es sich beispielsweise um das Media Redundancy Protokoll (MRP) gemäß IEC 62439-2 handeln. Die Anwendungs-Software 12 ist dann vorteilhaft derart ausgestaltet und eingerichtet, dass durch sie, insbesondere wahlweise, eine Funktion eines Ring-Redundanz-Managers oder eine Funktion eines Ring-Redundanz-Clients ausführbar ist. Es kann somit flexibel in dem Gerät 1 ein Ring-Redundanz-Managers oder Ring-Redundanz-Client gemäß MRP-Protokoll bereitgestellt bzw. nachgerüstet werden.

Gemäß einer weiteren vorteilhaften Ausgestaltung ist das Redundanz-Protokoll das High-availability Seamless Redundancy Protocol (HSR) oder das Parallel Redundancy Protocol (PRP) gemäß IEC 62439-3. Die Anwendungs-Software 12 ist dann derart ausgestaltet und eingerichtet, dass durch sie, insbesondere wahlweise, eine Funktion eines Double Attached Node (DAN), einer Redbox oder einer Quadbox ausführbar ist. Es kann somit flexibel in dem Gerät 1 ein Double Attached Node (DAN), eine Redbox oder eine Quadbox gemäß HSR- oder PRP-Protokoll bereitgestellt oder nachgerüstet werden.

Die Anwendungs-Software 12 stellt über den ersten Anschluss 2 eine Benutzerschnittstelle 15 für eine logischen Zuordnung von zweiten Anschlüssen (Ports) 4a - 4d durch einen Anwender des Geräts 1 bereit, d.h. um ausgewählte zweite Anschlüsse (Ports) 4a - 4d exklusiv zu allokieren und zur Weiterleitung von Datagrammen geschaltet miteinander zu verknüpfen. Die Benutzerschnittstelle 15 kann dabei auch Möglichkeiten für eine Auswahl von Redundanzfunktionen bzw. deren Parametrierung bereitstellen.

Im Fall des MRP-Protokolls ist durch die Anwendungs-Software 12 von Vorteil sowohl eine Funktion eines Ring-Redundanz-Managers als auch eine Funktion eines Ring-Redundanz-Clients ausführbar und über die Benutzerschnittstelle 15 erfolgt eine Auswahl einer der beiden Funktionen zu deren Ausführung.

Im Fall des HSR- oder PRP-Protokolls ist durch die Anwendungs-Software 12 sowohl eine Funktion eines Double Attached Node (DAN), einer Redbox und einer Quadbox ausführbar und über die Benutzerschnittstelle 15 erfolgt eine Auswahl einer der drei Funktionen zu deren Ausführung.

Um Fehlfunktionen von vorneherein zu vermeiden, stellt die Anwendungs-Software 12 von Vorteil auch eine Prüffunktion 16 bereit, die das Gerät 1 auf eine Eignung zur Ausführung von Redundanzfunktionen des gewünschten Redundanz-Protokolls prüft.

Die Ablaufsteuerungsumgebung 11 umfasst von Vorteil eine Softwarekomponente 17, die im Sinne eines Adapters zwischen der Anwendungs-Software 12 und der Hardware direkt auf die zweiten Anschlüsse (Ports) 4a - 4d zugreift und zur Ausführung der Redundanzfunktionen erforderliche Hardware-Ressourcen (Pufferspeicher für die Weiterleitung von Datagrammen, Zugriffszeiten, Interruptleitung zur CPU 7, etc.) des Gerätes 1 bereitstellt. Hierdurch kann ein gutes Zusammenwirken der Anwendungs-Software 12 und der Hardware des Gerätes 1 sichergestellt werden.

Die Softwarekomponente 17 ist von Vorteil ausgestaltet und eingerichtet, über die zweiten Anschlüsse (Ports) 4a - 4d empfangene Datagramme zu filtern und auszuwerten. Hierdurch kann sie beispielsweise in der Funktion eines MRP-Redundanz-Managers sicherstellen, dass der Ring in Ordnung ist, und im Fehlerfall eine Ringumschaltung durchführen.

Andere Anwendungs-Software wie zum Beispiel die Anwendungs-Software 14 kann Dienste bzw. Funktionen eines industriellen Automatisierungssystems bereitstellen, wie z.B. Steuerungsaufgaben, Datenerfassungs-/Datenausgabe-Aufgaben, komplexe Berechnungen, Auswertungen von Produktionsdaten, Archivierungsaufgaben, oder dem gesicherten Datenaustausch über das öffentliche Netzwerk 3 mit einer Cloud oder anderen Automatisierungssystemen dienen.

FIG 2 zeigt beispielhaft eine Einbindung des Edge-Gerätes 1 von FIG 1 in ein redundant betriebenes PROFINET-Netzwerk 20 unter Nutzung des Media Redundancy Protocols (MRP). Das ringförmige Netzwerk 20 ist dabei an die Ports 4a und 4b des Gerätes 1 angeschlossen. An das Netzwerk 20 sind eine Vielzahl von Kommunikations- bzw. Automatisierungsgeräten angeschlossen. Dies können beispielsweise PROFINET-fähige Switches 21 oder Automatisierungsgeräte mit integrierten PROFINET-Schnittstellen wie zum Beispiel speicherprogrammierbare Steuerungen (PLC) 22, Bedien- und Beobachtungsstationen 23 oder I/O-Stationen 24 sein. Im Fall von Fig 2 dienen die speicherprogrammierbaren Steuerungen (PLC) 22 beispielsweise zur Steuerung von Vorrichtungen 25 oder Maschinen 26. Eine I/O-Station 24 dient zur Erfassung von Messwerten und zur Ausgabe von Steuergrößen von bzw. an die Vorrichtungen und Maschinen. Eine Bedien- und Beobachtungsstation 23 dient zur Visualisierung von Prozessdaten bzw. Mess- und Steuergrößen.

Ein Teilnehmer an dem Netzwerk 20 muss dabei die Rolle des Ring-Redundanz-Managers gemäß MRP-Protokoll übernehmen, während alle anderen Teilnehmer die Rolle eines Ring-Redundanz-Clients besitzen. Das Edge-Gerät 1 kann hierbei nun flexibel entweder die Rolle des Ring-Redundanz-Managers oder die Rolle eines Ring-Redundanz-Clients übernehmen.

Der Kommunikationsanschluss 2 ist mit einem öffentlichen Netzwerk 3, wie zum Beispiel dem Internet, verbunden und kommuniziert mit einem nicht näher dargestellten Cloud-Server in der Cloud 29. Bei dem PROFINET-Netzwerk 20 handelt es sich dagegen um ein anlageninternes, privates Netzwerk. Das Edge-Gerät 1 befindet sich somit an der Grenze zwischen einem öffentlichen Bereich und einem privaten Bereich, was durch die gestrichelte Trennlinie 28 symbolisiert wird.

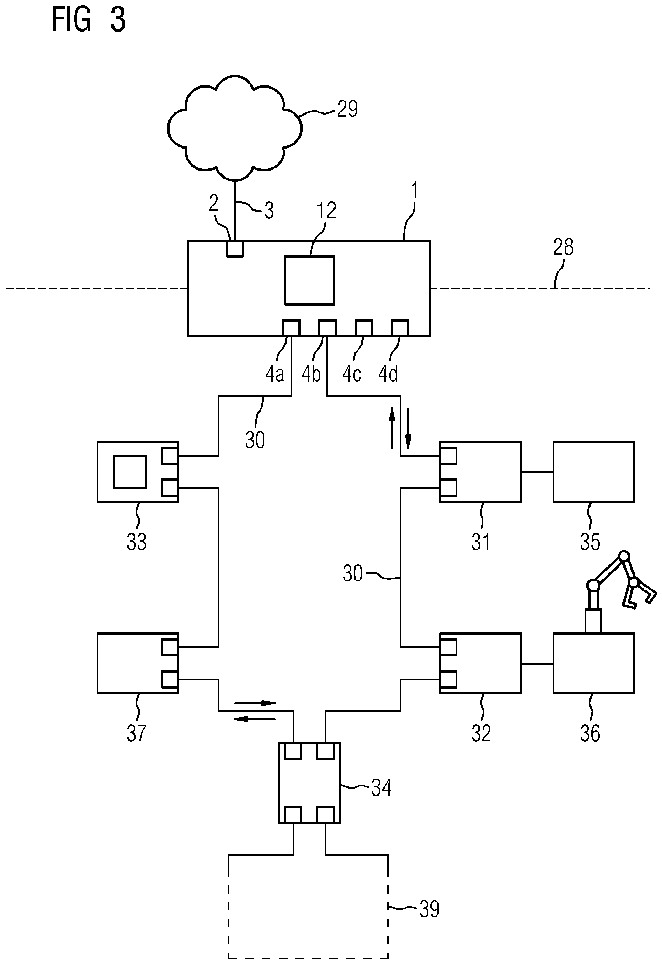

FIG 3 zeigt beispielhaft eine Einbindung des Edge-Gerätes 1 von FIG 1 in ein redundant betriebenes Industrial Ethernet-Netzwerk 30 unter Nutzung des High-availability Seamless Redundancy Protokolls (HSR). Auch hier liegt ein ringförmiges Netzwerk 30 vor, das an die Ports 4a und 4b des Gerätes 1 angeschlossen ist. An das Netzwerk 30 sind eine Vielzahl von Kommunikations- bzw. Automatisierungsgeräten angeschlossen. Diese werden gemäß IEC 62439-3 unterteilt in Double Attached Nodes (DAN), Redboxes oder Quadboxes.

Im Fall von FIG 3 ist mit dem Bezugszeichen 31 eine Redbox bezeichnet, über die ein nicht HSR-fähiges Gerät, hier beispielsweise ein Schutzgerät 35, an das Netzwerk 30 angebunden ist. Eine speicherprogrammierbare Steuerung (PLC) 32 zur Steuerung einer Maschine 36 ist HSR-fähig und deshalb als "Double Attached Node implementing HSR" (DANH) an das Netzwerk 30 angeschlossen. Mit dem Bezugszeichen 34 ist eine Quadbox bezeichnet, die das HSR-Netzwerk 30 mit einem weiteren HSR-Netzwerk 39 verbindet und Datenverkehr auf den Netzwerken filtert und an das jeweils andere Netzwerk weiterleitet. Eine Bedien- und Beobachtungsstationen 33 und eine I/O-Station 37 sind HSR-fähig und deshalb als "Double Attached Node implementing HSR" (DANH) an das Netzwerk 30 angeschlossen.

Zukünftig wird in derartigen Netzwerken verstärkt auch Time-Sensitive Networking (TSN) gemäß IEEE 802.1Q, IEEE 802.1AB, IEEE 802.1AS, IEEE 802.1BA bzw. IEEE 802.1CB zum Einsatz kommen.

Die Anwendungs-Software 12 ist vorteilhaft derart ausgestaltet und eingerichtet, dass durch sie, insbesondere wahlweise, eine Funktion eines Double Attached Node implementing HSR (DANH), einer Redbox oder einer Quadbox ausführbar ist.

Es kann somit flexibel in dem Edge-Gerät 1 ein Double Attached Node (DANH), eine Redbox oder eine Quadbox gemäß des HSR-Protokolls bereitgestellt oder nachgerüstet werden und dabei HSR-Duplikate-Filterfunktionen ausführen.

Von Vorteil ist durch die Anwendungs-Software sowohl eine Funktion eines Double Attached Node (DAN), einer Redbox und einer Quadbox ausführbar und die Anwendungs-Software 12 stellt über die Benutzerschnittstelle 15 die Möglichkeit zur Auswahl einer der drei Funktionen zu deren Ausführung bereit.

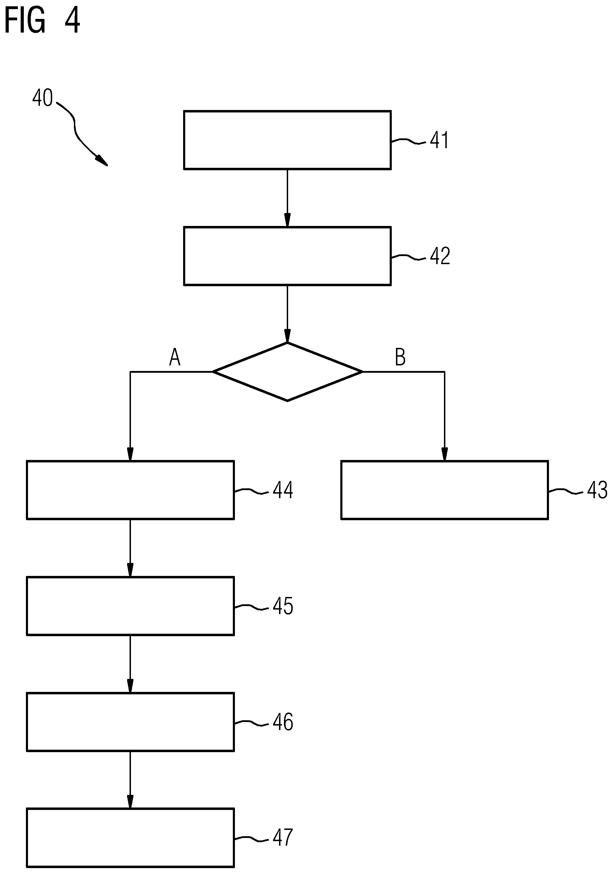

FIG 4 veranschaulicht einen erfindungsgemäßen Verfahrensablauf 40 zur Bereitstellung von Redundanzfunktionen gemäß eines industriellen Redundanzprotokolls auf dem Edge-Gerät 1 von FIG 1.

In einem ersten Schritt 41 wird von einem Benutzer mittels der Anwendungs-Software 13 und einer von dieser bereitgestellten Benutzeroberfläche über das öffentliche Netzwerk 3 und den Anschluss 2 die Anwendungs-Software 12 auf das Gerät 1 geladen und zur Ausführung gebracht.

In einem zweiten Schritt 42 prüft nun die Anwendungs-Software 12 die Hardware des Edge-Gerätes 1 auf eine Eignung zur Ausführung der Redundanzfunktionen, insbesondere auf das Vorhandensein einer benötigten Anzahl von zweiten Anschlüssen (Ports) 4a-4d, d.h. mindestens zwei Anschlüssen (Ports). Die Prüfung erfolgt hierbei unter Nutzung der Softwarekomponente 17 der Ablaufsteuerungsumgebung 11.

Bei nicht erfolgreicher Prüfung, z.B. wenn keine zwei Anschlüsse (Ports) vorhanden sind, wird das Verfahren von der Anwendungs-Software 12 in einem Schritt 43 mit einer Fehlermeldung beendet (siehe Pfad B).

Bei erfolgreicher Prüfung (siehe Pfad A) wird in einem weiteren Schritt 44 ein Anwender von der Anwendungs-Software 12 mittels der Benutzeroberfläche 15 nach Angaben zur Konfiguration der zweiten Anschlüsse (Ports), insbesondere einer Auswahl von zweiten Anschlüssen (Ports) und deren logischer Verschaltung, und zur Auswahl von Redundanzfunktionen aufgefordert (im Fall des MRP-Protokolls beispielsweise, ob das Gerät 1 die Rolle eines Ring-Redundanz-Managers oder Ring-Redundanz-Clients ausführen soll).

Diese Angaben werden von der Anwendungs-Software 12 in einem Schritt 45 erfasst und daraufhin in einem Schritt 46 die ausgewählten zweiten Anschlüsse (Ports) logisch miteinander verschaltet. Außerdem werden die ausgewählten Redundanzfunktionen in der Anwendungs-Software 12 eingestellt bzw. konfiguriert.

In einem letzten Schritt 47 kann dann das Netzwerk 20 bzw. 30 an die ausgewählten und logisch miteinander verschalteten zweiten Anschlüsse (Ports) physikalisch angeschlossen werden.

## Patentansprüche

1. Edge-Gerät (1) umfassend
- einen ersten Kommunikationsanschluss (2) zu einem ersten Netzwerk (3), insbesondere einem öffentlichen Netzwerk,
- zumindest zwei zweiten Kommunikationsanschlüssen (4a, 4b, 4c, 4d) zu einem zweiten Netzwerk (20, 30), insbesondere einem privaten industriellen Netzwerk, und
- eine Anwendungs-Software (12), die über den ersten Anschluss (2) in das Gerät (1) ladbar ist,
wobei mittels der Anwendungs-Software (12) die zweiten Anschlüsse (4a, 4b, 4c, 4d) für einen redundanten Betrieb des zweiten Netzwerkes (20, 30) gemäß eines industriellen Redundanz-Protokolls konfigurierbar sind, und wobei die Anwendungs-Software (12) zur Ausführung von Redundanzfunktionen des Redundanz-Protokolls ausgestaltet und eingerichtet ist.

2. Edge-Gerät (1) nach Anspruch 1, wobei das Redundanz-Protokoll das Media Redundancy Protokoll (MRP) gemäß IEC 62439-2 ist.

3. Edge-Gerät (1) nach Anspruch 2, wobei die Anwendungs-Software (12) derart ausgestaltet und eingerichtet ist, dass durch sie, insbesondere wahlweise, eine Funktion eines Ring-Redundanz-Managers oder eine Funktion eines Ring-Redundanz-Clients gemäß IEC 62439-2 ausführbar ist.

4. Edge-Gerät (1) nach Anspruch 1, wobei das Redundanz-Protokoll das High-availability Seamless Redundancy Protocol (HSR) oder das Parallel Redundancy Protocol (PRP) gemäß IEC 62439-3 ist.

5. Edge-Gerät (1) nach Anspruch 4, wobei die Anwendungs-Software (12) derart ausgestaltet und eingerichtet ist, dass durch sie, insbesondere wahlweise, eine Funktion eines Double Attached Node (DAN), einer Redbox oder einer Quadbox gemäß IEC 62439-3 ausführbar ist.

6. Edge-Gerät (1) nach einem der vorhergehenden Ansprüche, wobei die Anwendungs-Software (12) eine Benutzerschnittstelle (15) für eine logischen Zuordnung von zweiten Kommunikationsanschlüssen (4a, 4b, 4c, 4d) und/oder für eine Auswahl von Redundanzfunktionen bereitstellt.

7. Edge-Gerät (1) nach einem der vorhergehenden Ansprüche, wobei die Anwendungs-Software (12) eine Prüffunktion (16) bereitstellt, die das Edge-Gerät (1) auf eine Eignung zur Ausführung der Redundanzfunktionen des Redundanz-Protokolls prüft.

8. Edge-Gerät (1) nach einem der vorhergehenden Ansprüche, umfassend eine Ablaufsteuerungsumgebung (11), die dafür ausgestaltet und eingerichtet ist, auf einem Host-Betriebssystem (10) abzulaufen, das im Gerät (1) installiert ist, wobei die Anwendungs-Software (12) in die Ablaufsteuerungsumgebung (11) zur dortigen Ausführung ladbar ist und wobei die Ablaufsteuerungsumgebung (11) eine Schnittstelle zum Zugriff auf die zweiten Kommunikationsanschlüsse (4a, 4b, 4c, 4d) aufweist.

9. Edge-Gerät (1) nach Anspruch 8, wobei die Anwendungs-Software (12) ein oder mehrere Software-Container umfasst, die dafür ausgestaltet und eingerichtet sind, von anderen Software-Containern oder Container-Gruppen isoliert innerhalb der Ablaufsteuerungsumgebung (11) auf dem Host-Betriebssystem (10) abzulaufen.

10. Edge-Gerät (1) nach Anspruch 8 oder 9, wobei die Ablaufsteuerungsumgebung (11) eine Softwarekomponente (17) umfasst, die direkt auf die zweiten Kommunikationsanschlüsse (4a, 4b, 4c, 4d) zugreift und zur Ausführung der Redundanzfunktionen erforderliche Hardware-Ressourcen des Gerätes bereitstellt.

11. Edge-Gerät (1) nach Anspruch 10, wobei die Softwarekomponente (17) über die zweiten Kommunikationsanschlüsse (4a, 4b, 4c, 4d) empfangene Datagramme filtert und auswertet.

12. Anwendungs-Software (12), die bei einem Gerät (1) nach einem der vorhergehenden Ansprüche über den ersten Kommunikationsanschluss (2) in das Gerät (1) ladbar ist, wobei mittels der Anwendungs-Software (12) die zweiten Kommunikationsanschlüsse (4a, 4b, 4c, 4d) des Geräts (1) für einen redundanten Betrieb des zweiten Netzwerkes (20, 30) gemäß eines Redundanz-Protokolls konfigurierbar sind, und wobei die Anwendungs-Software (12) zur Ausführung von Redundanzfunktionen des Redundanz-Protokolls ausgestaltet und eingerichtet ist.

13. Verfahren zur Bereitstellung von Redundanzfunktionen gemäß eines industriellen Redundanzprotokolls auf einem Edge-Gerät (1) nach einem der Ansprüche 1 bis 11 mit folgenden Schritten:
- Laden der Anwendungs-Software (12) auf das Gerät (1),
- Prüfen einer Hardware des Gerätes (1) auf eine Eignung zur Ausführung der Redundanzfunktionen durch die Anwendungs-Software (12), insbesondere auf das Vorhandensein einer benötigten Anzahl von zweiten Anschlüssen (4a, 4b, 4c, 4d),
- bei nicht erfolgreicher Prüfung: Beendigen des Verfahrens,
- bei erfolgreicher Prüfung: Weiterführen des Verfahrens mit folgenden Schritten:
- Auffordern zur Bereitstellung von Angaben zur Konfiguration der zweiten Anschlüsse (4a, 4b, 4c, 4d), insbesondere zu deren logischer Verschaltung, und/oder zur Auswahl von Redundanzfunktionen,
- Erfassen von Angaben zur Konfiguration der zweiten Anschlüsse (4a, 4b, 4c, 4d), insbesondere zu deren logischer Verschaltung, und/oder zur Auswahl von Redundanzfunktionen,
- Konfigurieren der zweiten Anschlüsse (4a, 4b, 4c, 4d), insbesondere logisches miteinander Verschalten der zweiten Anschlüsse (4a, 4b, 4c, 4d), und/oder Einstellen der ausgewählten Redundanzfunktionen in der Anwendungs-Software (12),
- physikalisches Anschließen des zweiten Netzwerkes (20, 30) an die zweiten Kommunikationsanschlüsse (4a, 4b, 4c, 4d).
